# EUROPEAN PATENT SPECIFICATION

(11) **EP 2 043 447 B1**
(45) Date of publication and mention of the grant of the patent: **18.09.2019**
(21) Application number: 07873312.8
(22) Date of filing: 20.07.2007
(51) Int. Cl.: A23B 4/20, A23B 4/24, A23L 3/3463, A23L 3/358, A23L 3/02, A23B 4/005, A23B 4/01, A23L 3/3508

(54) **ANTIMICROBIAL COMPOSITIONS AND METHODS FOR TREATING PACKAGED FOOD PRODUCTS**
ANTIMIKROBIELLE ZUSAMMENSETZUNG UND VERFAHREN ZUR BEARBEITUNG VERPACKTER NAHRUNGSMITTEL
COMPOSITIONS ANTIMICROBIENNES ET PROCÉDÉS POUR TRAITER DES PRODUITS ALIMENTAIRES EMBALLÉS

(30) Priority: 21.07.2006 US 807956 P; 18.07.2007 US 779596
(43) Date of publication of application: 08.04.2009
(73) Proprietor: ECOLAB INC., St. Paul, MN 55102 (US)
(72) Inventor: GUTZMANN, Timothy, A., Eagan, MN 55123 (US); BURNETT, Scott, L., St. Paul, MN 55033 (US); PODTBURG, Teresa, C., Waconia, MN 55387 (US); BODNARUK, Peter, W., Lakeville, MN 55044 (US); HERDT, Joy, G., Hastings, MN 55033 (US); CHOPSKIE, Jocelyn, H., Eagan, MN 55123 (US)
(74) Representative: Godemeyer Blum Lenze Patentanwälte Partnerschaft mbB - werkpatent
(86) International application number: PCT/US2007/016454
(87) International publication number: WO 2008/100280

(56) References cited:
- WO-A-02/054866
- WO-A2-2007/018923
- US-A1- 2004 018 284
- US-A1- 2005 152 991
- MCCORMICK K E ET AL: "IN-PACKAGE PASTEURIZATION COMBINED WITH BIOCIDE-IMPREGNATED FILMS TO INHIBIT LISTERIA MONOCYTOGENES AND SALMONELLA TYPHIMURIUM IN TURKEY BOLOGNA" JOURNAL OF FOOD SCIENCE, INSTITUTE OF FOOD TECHNOLOGISTS, CHICAGO, IL, US, vol. 70, no. 1, 11 January 2005 (2005-01-11), pages M52-M57, XP008071365 ISSN: 0022-1147
- SAMELIS J ET AL: "CONTROL OF LISTERIA MONOCYTOGENES WITH COMBINED ANTIMICROBIALS AFTER POSTPROCESS CONTAMINATION AND EXTENDED STORAGE OF FRANKFURTERS AT 4 DEGREE C IN VACUUM PACKAGES" JOURNAL OF FOOD PROTECTION, DES MOINES, IO, US, vol. 65, no. 2, 1 January 2002 (2002-01-01), pages 299-307, XP008071340 ISSN: 0362-028X

## Description

### FIELD OF THE INVENTION

This disclosure provides a method of using antimicrobial compositions on a food product where the antimicrobial compositions are applied to a food product, the food product is packaged and sealed, and then optionally activation energy is applied to the sealed product to activate the antimicrobial compositions.

### BACKGROUND

During the processing, preparation and packaging of food products, the food product may encounter microorganisms which make the food unsuitable for consumption. The microorganisms may come from the food itself, the food contact surfaces, or the surrounding environment. The microorganisms can include pathogenic microorganisms (e.g., *Listeria monocytogenes,* enterohemorrhagic *Escherichia coli,* and *Salmonella*) and spoilage organisms that affect the taste, color, or smell of the food product (e.g., *Pseudomonas, Acinetobacter, Moraxella, Alcaligenes, Flavobacterium, and Erwinia*). Microorganisms affect many food products including meat, poultry, fish and shellfish, cheese, fruits and vegetables, and pre-prepared foods. At certain levels, microorganisms on a food product cause a consumer's perception of a lower quality product, regulatory investigations and sanctions, foodborne illness and death.

Food processors use several methods during processing to control or reduce microorganisms on food products. These methods include cleaning and sanitizing the plant environment, applying or incorporating antimicrobials to or in the food product, irradiating the food product, applying heat, and others. Applying or incorporating an antimicrobial composition to or in the food product is a preferred way of controlling microorganisms. But, it is difficult to formulate a composition that is effective at reducing microorganisms using ingredients that are acceptable for direct food contact according to government regulations. Further, it is difficult to formulate a composition that can be applied directly to a food product without adversely affecting the color, taste, or smell of the food product. Finally, once a food product has been treated with an antimicrobial composition or process to control the presence of microorganisms on the food product, the opportunity exists for the food product to become re-contaminated during further processing.

Food safety agencies have issued guidelines for processing food that may have exposure to surfaces contaminated with microorganisms including *Listeria monocytogenes, Salmonella,* and *E. coli* O157-H7. See e.g., Food Safety Inspection Service (FSIS) final rule for the control of *Listeria monocytogenes* in ready-to-eat (RTE) meat and poultry products, 9 CFR 430.

The FSIS guidelines on *Listeria* provide three alternatives for controlling the presence of *Listeria* on a RTE product. Under Alternative 1, an establishment applies a post-lethality treatment to the RTE product and an antimicrobial agent or process to control or suppress the growth of *L. monocytogenes* during the shelf life of the RTE product. Under Alternative 2, an establishment applies either a post-lethality treatment or an antimicrobial agent or process to suppress the growth of *L. monocytogenes.* Under Alternative 3, an establishment does not apply any post-lethality treatment or antimicrobial agent or process. Instead, it relies on its sanitation program to prevent the presence of *L. monocytogenes.* RTE products produced under Alternative 2 have greater control over *Listeria* contamination than RTE products produced under Alternative 3. Similarly, RTE products produced under Alternative 1 have greater control over *Listeria* contamination than those produced under Alternative 2. Facilities operating under Alternative 1 are subject to less agency intervention (e.g., inspections, recordkeeping, etc.) than an Alternative 2 or Alternative 3 facility.

*Salmonella* is prevalent on raw poultry, beef, and pork. And, *Salmonella* has a high incidence of causing foodborne illness, and sometimes severe foodborne illness. Establishments must employ processes validated to achieve specific levels of reduction of *Salmonella* organisms throughout their finished RTE meat and poultry product (6.5 log₁₀ throughout finished meat products and 7 log₁₀ throughout finished poultry products).

*E. coli* O157:H7 has been linked to foodborne illness outbreaks. The FSIS has additional lethality performance standards for all fermented RTE products that include any amount of beef, except thermally-processed, commercially sterile products. Establishments must employ processes validated to achieve a 5.0 log₁₀ reduction of *E. coli* O157:H7 throughout fermented products containing beef.

WO 02/054866 A relates to compositions including peroxyacetic acid and peroxyoctanoic acid and methods for reducing microbial contamination on poultry. The methods include the step of applying a mixed peroxycarboxylic acid composition to poultry. US 2004/018284 A1 provides methods for controlling contamination of a food product which utilize a combined treatment comprising thermal surface treatment and introduction of an antimicrobial solution to a food package prior to vacuum sealing the package.

It is against this background that the invention has been made.

### SUMMARY

Surprisingly, it has been discovered that microorganisms on food products can be controlled by applying antimicrobial compositions to the food product, packaging the food product, sealing the packaging and, optionally applying activation energy to the sealed food product to further activate the antimicrobial compositions inside the packaging. This method has several advantages. For example, the initial application of the antimicrobial compositions reduces the number of microorganisms on the surface of the food product on contact. Further, by allowing the antimicrobial compositions to remain on the food product when the food product is packaged and sealed and optionally treated with an activation energy, the antimicrobial compositions can reduce the number of microorganisms on the food product between the initial application and packaging if the food product becomes re-contaminated. The result is better control of pathogenic or spoilage microorganisms in the food product and enhanced consumer satisfaction. The invention provides a method of treating a food product comprising: a) applying a first antimicrobial composition to the food product; b) sequentially applying a second antimicrobial composition to the food product within 30 minutes of the first antimicrobial composition, the second antimicrobial composition comprising 0.01 wt.% to 2 wt.% of a fatty acid, wherein the fatty acid is octanoic acid; c) packaging the food product; and d) sealing the packaging, wherein the first antimicrobial composition comprises 0.01 wt.% to 2 wt.% of an antimicrobial agent that is oxidative, wherein the oxidative antimicrobial agent is acidified sodium chlorite; wherein the fatty acid and oxidative agent are part of separate compositions. The invention is defined by the appended claims.

### BRIEF DESCRIPTION OF THE DRAWINGS

Figure 1 illustrates a schematic of an immersion shrink tunnel.
Figure 2 illustrates a schematic of a cascading shrink tunnel.
Figure 3 illustrates a schematic of a cascading shrink tunnel with a bottom basin.
Figure 4 illustrates a schematic of a drip flow shrink tunnel with a bottom jet.
Figure 5 illustrates a schematic of a drip flow shrink tunnel with a bottom basin.

### DETAILED DESCRIPTION OF SOME EMBODIMENTS

The disclosure generally provides a method of controlling microorganisms on a food product by applying antimicrobial compositions to the food product, packaging the food product, sealing the packaging, and optionally applying activation energy to the sealed food product to further activate the antimicrobial compositions inside the packaging. Also described herein are antimicrobial compositions to be used in conjunction with the method.

In one of several aspects, the disclosure provides a method of controlling microorganisms on a food product by applying an antimicrobial compositions to the food product, and packaging the food product where the antimicrobial compositions are not rinsed off of the food product, and once the packaging is sealed, optionally applying activation energy to the sealed food product to activate the antimicrobial compositions inside the packaging.

The method of the invention can be described in the following steps. First, the unpackaged food product enters the packaging area. Thereafter, a first and a second antimicrobial compositions are applied in one of several ways to the food product before the packaging of the food product. The packaging is sealed. Following the packaging and sealing, the sealed food product is optionally exposed to a certain amount of activation energy for a period of time to activate the antimicrobial compositions inside the packaging. Each of the steps will now be described in further detail.

### Application of the Antimicrobial Compositions

The antimicrobial compositions are applied to the food product prior to the packaging of the food product. According to the invention, there are at least two antimicrobial agents, referred to as a first and second antimicrobial agent. The first and second antimicrobial agents are part of separate compositions applied sequentially. Applied sequentially, the first and second antimicrobial agent are applied within 30 minutes of each other, 10 minutes of each other, and 1 minute of each other, 30 seconds of each other, 10 seconds of each other and 5 seconds of each other. Preferably the amount of time in between the application of the first antimicrobial agent and the second antimicrobial agent is reduced as much as possible. If the amount of time in between application of the first and second antimicrobial agents is reduced, it will allow the first and second antimicrobial to intermingle with each other and allow for improved control of microorganisms. According to the invention, the first antimicrobial agent is oxidative and the second antimicrobial agent is non-oxidative.

The antimicrobial compositions may be applied to the food product in several ways. In some embodiments, the antimicrobial compositions may be applied directly to the food product in many ways including spraying, misting, rolling, fogging and foaming the antimicrobial compositions directly onto the food product, and immersing the food product in the antimicrobial compositions. The antimicrobial compositions may be applied in an injection solution, or the antimicrobial compositions may be applied as part of a marinade or tenderizer that is applied to the food product.

In some embodiments, the antimicrobial compositions may be indirectly applied to the food product. The antimicrobial compositions may be applied to the food product by applying the compositions to processing equipment such as knives, cutting tools, etc. and using the processing equipment to transfer the compositions to the food product.

The first and second antimicrobial agents may be applied directly or indirectly using any of the above described application methods or combination of methods. For example, the first antimicrobial agent may be applied using one method and the second antimicrobial agent may be applied using the same method. Alternatively, the first antimicrobial agent may be applied using one method and the second antimicrobial agent may be applied using a different method.

Table A describes the single steps of the inventive method. It is understood that in the following table, the application step may involve any of the previously described methods of application.

**Table A - Inventive Method Steps**

| Step 1 | Step 2 | Step 3 | Step 4 | Step 5 |
|---|---|---|---|---|
| Apply acidified sodium chlorite composition to food product | Apply carboxylic acid composition to food product | Package food product | Seal the packaging | Optional activation energy step |

### Antimicrobial Compositions

The method includes the application of a first antimicrobial composition and a second antimicrobial composition to the food product. The antimicrobial compositions each comprise at least one active antimicrobial ingredient. Additionally, the antimicrobial compositions may also contain additional functional ingredients that aid in the function of the active antimicrobial ingredient, or impart a desired function or benefit.

There are a variety of active antimicrobial agents known in the art. Some examples of antimicrobial agents include fatty acids, C₁-C₁₂ dicarboxylic acids, percarboxylic acids, halogen compositions or interhalogens thereof, a halogen donor composition, chlorine dioxide, acidified sodium chlorite, ozone, a quaternary ammonium compound, an acid-anionic organic sulfonate or sulfate, a protonated carboxylic acid, or mixtures thereof. Some examples of fatty acids include C₆ to C₂₂ fatty acids. Fatty acids may be saturated in which all of the alkyl chain carbon atoms are connected by a single bond. Fatty acids can also be unsaturated where there are one or more double bonds between the carbon atoms. Examples of saturated fatty acids include hexanoic (C₆), octanoic (C₈), nonanoic (C₉), decanoic (C₁₀), lauric (C₁₂), myristic (C₁₄), palmitic (C₁₆), stearic (C₁₈), arachidic (C₂₀), behenic (C₂₂) and the like. Examples of unsaturated fatty acids include palmitoleic (C_{16:1}), oleic (C_{18:1}), linoleic (C_{18:2}), linolenic (C_{18:3}), arachidonic (C_{20:1}) and the like. Octanoic acid is a preferred fatty acid. Some examples of percarboxylic acids include: C₁-C₁₀ percarboxylic acids, diperoxyglutaric acid, diperoxyadipic acid, diperoxysuccinic acid, diperoxysuberic acid, diperoxymalonic acid, peroxylactic acid, peroxyglycolic acid, peroxyoxalic acid, peroxypyruvic acid, and mixtures thereof. An exemplary percarboxylic acid antimicrobial product is that sold under the name INSPEXX™, commercially available from Ecolab Inc. (St. Paul, MN). Some examples of halogen compounds and interhalogens thereof include: Cl₂, Br₂, I₂, ICl, IBr, ClBr, ICl₂⁻, IBr₂⁻, and mixtures thereof. Examples of halogen donor compositions include: HOCl, HOI, HOBr, and the salts thereof; N-iodo, N-bromo, or N-chloro compounds; and N-bromosuccinamide, chloroisocyanuric acid, or 2-N-sodium-N-chloro-p-toluenesulfonamide. An example of chlorine dioxide compositions includes chlorine dioxide generated from conventional chemical generators such as those sold by Prominent™ or preferably generated electrochemically using Halox™ generators. Some examples of acidified sodium chlorite include the composition sold under the tradename SANOVA™, and commercially available from Ecolab Inc., (St. Paul, MN). An example of ozone includes ozone generated electrochemically via high voltage discharge in oxygen. Examples of quaternary ammonium compounds include: didecyldimethylammonium chloride, dioctyldimethylammonium chloride, octyldecyldimethylammonium chloride, alkyldimethylbenzylammonium chloride, and mixtures thereof. Examples of acid-anionic organic sulfonates and sulfates include: acidic solutions of linear benzylsulfonic acid and sulfonated oleic acid. Examples of protonated carboxylic acids include solutions with a pH less than 5 of one or more C₁-C₂₀ carboxylic acids. See U.S. Pat. Nos. 4,051,058, 4,051,059, 5,200,189, 5,200,198, 5,489,434, 5,718,910, 5,314,687, 5,437,868 for further discussion on peracid chemistry and the formation of an antimicrobial agent formulation.

The active antimicrobial agent is preferably a GRAS (generally recognized as safe) or food grade composition. According to the invention, the active antimicrobial agents are octanoic acid (fatty acid), and acidified sodium chlorite.

When applying the antimicrobial compositions to the food product, the antimicrobial compositions contain from 0.01 wt.% to 2 wt.% of the active antimicrobial agent. It is understood that different antimicrobial agents have different activities. A person skilled in the art will be able to select the antimicrobial composition and concentration to achieve the desired result.

As previously discussed, the antimicrobial compositions may include additional functional ingredients in addition to the active antimicrobial agent. Examples of additional functional ingredients that may be included along with the active antimicrobial agent include oxidizers, carriers, chelating agents, hydrotropes, thickening and/or gelling agents, foaming agents, film-forming agents, surfactants, coupling agents, acidulants, buffering agents, pH adjusting agents, potentiators preservative, flavoring aids, fragrance, dye, and the like.

The antimicrobial compositions may include one or more coupling agents for maintaining the raw materials of the composition in solution. The coupling agent is preferably a GRAS or food additive raw material. Some examples of suitable coupling agents include propylene glycol esters, glycerol esters, polyoxyethylene glycerol esters, polyglycerol esters, sorbitan esters, polyoxyethylene sorbitan esters, polyoxyethylene-polyoxypropylene polymers, sulfonates, dioctyl sodium succinate, stearoyl lactylate, and complex esters such as acetylated, lactylated, citrated, succinhylated, or diacetyl tartarated glycerides. The coupling agent is preferably a sorbitan ester such as polyoxyethylene (20) sorbitan monooleate, commercially available as Polysorbate 80, polyoxyethylene (20) sorbitan monostearate, commercially available as Polysorbate 60, and polyoxyethylene (20) sorbitan monolaurate, commercially available as Polysorbate 20.

The antimicrobial compositions optionally includes one or more buffers. The buffer is preferably the conjugate base of the acidulant used in the composition. Further, the buffer is preferably considered to be a GRAS or food additive raw material. The buffer can be added directly to the composition in the form of the salt of the acidulant or formed by adding a neutralizing base to the acidulant. For example, if the buffer is created in the composition then a neutralizing base should be added to the acidulant to form the corresponding buffering salt. The neutralizing base is preferably considered GRAS or food additive. Some examples of suitable neutralizing bases include sodium hydroxide, potassium hydroxide, silicates, trisodiumphosphates and the like.

The buffer salts are preferably GRAS or food additive. Some examples of suitable buffers include citric acid combined with sodium or potassium citrate, or phosphoric acid combined with monosodium phosphate, however, a person skilled in the art will be able to select the corresponding salt of the desired acidulant.

The buffer is preferably citric acid combined with sodium or potassium citrate.

The exact amount of the buffer in the composition will depend on the strength and amount of the acidulant and a person of ordinary skill in the art will be able to determine the exact weight percent of the buffer at equilibrium. However, when the composition is formulated as a concentrate composition, the buffer may be present in a concentration ranging generally from 1 wt.% to 50 wt.%, from 1.5 wt.% to 25 wt.%, and from 2 wt.% to 15 wt.%. When the composition is formulated as a ready-to-use composition, the buffer may be present in a concentration ranging generally
from 0.1 wt.% to 10.0 wt.%, from 0.2 wt.% to 5.0 wt.%, and from 0.4 wt.% to 3.0 wt.%. The buffer is preferably included in the composition in an amount effective to maintain the pH of the ready-to-use composition from 1.0 to 5.6, from 1.5 to 4.5, and from 2.0 to 4.0.

The compositions may include a preservative. Examples of preservatives include sorbic acid, benzoic acid, ascorbic acid, and erythorbic acid. The preservatives can be included as the acid form, as salts or as a combination of acid and salts. Salts forms would include counter ions such as sodium, potassium, calcium and magnesium. Any additional functional ingredient is preferably a GRAS or food grade ingredient since the antimicrobial composition is preferably applied to the food product. A person of ordinary skill in the art will be able to formulate compositions depending on the desired active antimicrobial agent, and the desired physical properties so that the various ingredients do not adversely affect each other.

In certain embodiments, it may be desirable for the pH of the compositions to be substantially equivalent to the isoelectric point of the fresh meat protein. The isoelectric point of meat occurs at a pH of 5.4 to 5.6. At the isoelectric point of proteins, the number of positive and negative charges are the same and the net charge is zero. As the pH of the meat and its immediate environment reach the isoelectric point of meat proteins, the protein spaces reduce, resulting in a reduced water holding capacity (WHC) of the meat. It is theorized that antimicrobial compositions at a pH within the range of 5.4 to 5.6 take advantage of the reduced WHC because the meat tissue holds less water and the dilution effect of the active antimicrobial species within the composition is reduced, thereby providing for improved bactericidal efficacy. It is also theorized that maintaining a pH level of the meat and the antimicrobial compositions applied at or near the meat protein isoelectric point eliminates the potential for microorganisms to infiltrate into the myofibrillar tissues. Meat tissue reacts to acidic compositions, for example, by increasing its protein space, thereby allowing access into subsurface tissues by microorganisms which evade the disinfection activity by the applied antimicrobial. In addition, antimicrobial compositions at a pH within the range of 5.4 to 5.6 exhibit substantially reduced organoleptic impact compared to those at pH levels higher or lower than that range. For example, acidic antimicrobial compositions tend to convert myoglobin into metmyoglobin irreversibly. The result is a meat product with a color unacceptable to the consumer. Compositions at the meat isoelectric point do not result in the formation of metmyoglobin and the result is a more favorably colored meat product.

The antimicrobial compositions may have a range of physical forms. For example, the antimicrobial compositions may be a solid, liquid, structured or thickened liquid or gel, foam, pellet, prill, or a powder. Further, the antimicrobial compositions may be a part of a dissolvable film such as polyvinylalcohol (PVA) or cellulose film, or the antimicrobial compositions may be blown or extruded with a film, impregnated in a film, or coated on a film. Further, the antimicrobial compositions may be formulated as a concentrate composition or a ready-to-use composition. A concentrate composition is often less expensive to ship than a ready-to-use composition. The concentrate refers to the composition that is diluted to form the ready-use-composition. The ready-to-use composition refers to the composition that is applied to the food product.

In certain embodiments, it may be desirable for the active antimicrobial agents to have a lasting effect once the food product is packaged and continue to provide a suppression of growth. For example, it may be desirable under Alternative 1 for the antimicrobial composition to continue to provide an antimicrobial effect over the entire shelf life of the food product and prevent the growth of microorganisms. In other embodiments, it may be desirable for the active antimicrobial agents to cease having an antimicrobial effect shortly after packaging or the activation energy is applied.

### Packaging

The food products may be packaged in a variety of ways including vacuum packaging, shrink wrapping, and modified atmosphere packaging. Further, the food products may be packaged in a variety of packaging materials including bags, pouches, films such as shrink films and non-shrink films, trays, bowls, clam shell packaging, web packaging, and hot dog/frankfurter packaging. The methods are especially useful in conjunction with the shrink wrap packaging that is used in a shrink wrap process.

The packaging of the food product occurs after the application of the antimicrobial compositions. In these cases where the antimicrobial compositions are applied first, and the packaging takes place in a separate step, the packaging step preferably takes place no more than 30 minutes after the application of the antimicrobial compositions, no more than 10 minutes after the application of the antimicrobial compositions, no more than 60 seconds after the application of the antimicrobial compositions, and no more than 5 seconds after the application of the antimicrobial compositions. Reducing the amount of time in between the application of the antimicrobial compositions to the food product, and when the food product is placed inside the packaging, reduces the likelihood that the food product will be re-contaminated in between the two steps.

### Activation Energies

The method optionally includes the application of activation energy to a product to activate the antimicrobial compositions. When using activation energy, enough energy must be applied to the antimicrobial compositions for a sufficient period of time in order to activate it. The exact amount of energy and length of time may vary depending on the antimicrobial compositions, the food product, and the method of energy application. A person skilled in the art will be able to select the desired activation energy, and duration depending on the antimicrobial compositions and food product.

Examples of suitable activation energies that may be used with all of the methods described herein include heat, pressure, ultraviolet light, infrared light, ultrasonic, radio frequency, microwave radiation, gamma radiation, and the like. Preferred activation energies include heat, pressure, and microwave radiation. It is understood that different activation energies will have different parameters (i.e. amount, duration). A person skilled in the art will be able to select the activation energy and parameters to achieve he desired result.

When heat is used as the activation energy, the heat may be applied in several ways including but not limited to hot water, steam, and hot air.

When using heat as the activation energy, the temperature of the heat is preferably from 160° F (71° C) to 210° F (99° C), from 180° F (82° C) to 200° F (93° C), and from 190° F (88° C) to 200° F (93° C). It is understood that the temperatures provided describe the temperature of the composition (e.g., the temperature of the water or air) being applied to the packaged food product, and not the temperature of the food product. For other activation energies described, the activation energy used should correspond to the energy applied using heat at the above temperatures.

Examples of application time for the above described activation energies that may be used in conjunction with all of the methods, include less than 60 seconds, from 1 to 60 seconds, from 2 to 20 seconds, and from 3 to 10 seconds.

It is understood that the heat activation of the present method is different from thermal surface treatment of a food product (e.g., hot water or pasteurization). In a thermal surface treatment process, a thermal source, such as hot water or steam, is applied to a food product either directly to the surface of the food product, or indirectly, by applying heat to the packaging surface. Typical thermal surface treatments apply high temperature heat and/or long exposure times in an effort to reduce the presence of microorganisms (e.g., provide a "lethal" amount of heat to kill microorganisms). Further, thermal surface treatments require large equipment capital investments and take up a lot of space in a processing facility. Finally, thermal surface treatments have negative organoleptic effects on the food product including color and odor changes and cause increases in liquid purge volumes on meat products. The heat activation provides little, if any, reduction in the level of microorganisms (e.g., a "sub-lethal" amount of heat) because the purpose of the addition of heat is to activate the applied antimicrobial composition which in turn reduces the level of microorganisms, not to use the heat itself to reduce the level of microorganisms. Additionally, the heat used in the method does not impact organoleptic properties or purge volumes.

While not wanting to be bound by any scientific theory, it is believed that the method works in one of two ways. First, energy is known to increase the kinetics of reactions responsible for cell death. Accordingly, the application of energy to food products treated with an antimicrobial composition may increase the efficacy of the antimicrobial composition based on this principle. Second, it is known that the phospholipids in the bilayer of bacterial membranes undergo radical changes in physical state over narrow temperature ranges, sometimes referred to as phase transition temperatures or melting temperatures. Similar conformational or denaturative changes take place in the intracellular organelles. It is believed that the method takes advantage of these phenomenons by exposing microorganisms to energy in order to reach or pass the phase transition temperature and creating a liquid crystal conformation in the bilayer in which the bilayer becomes more permeable to the antimicrobial composition. Further, the targeted organelles within the microorganism also exhibit conformational changes that make them more susceptible to the antimicrobial composition.

### Shrink Tunnels

In certain embodiments, the method may be carried out in a shrink tunnel using heat as the activation energy, and shrink-wrap film as the packaging. In the shrink wrapping process, a food product is vacuum-packaged in a packaging film that is designed to shrink when heated and form a film around the food product. Once vacuum-packaged, the packaged food product travels through a shrink tunnel that applies heat to the packaging to shrink the packaging around the food product. The heat may be applied in several ways including immersion into a heated bath, or through cascading hot water.

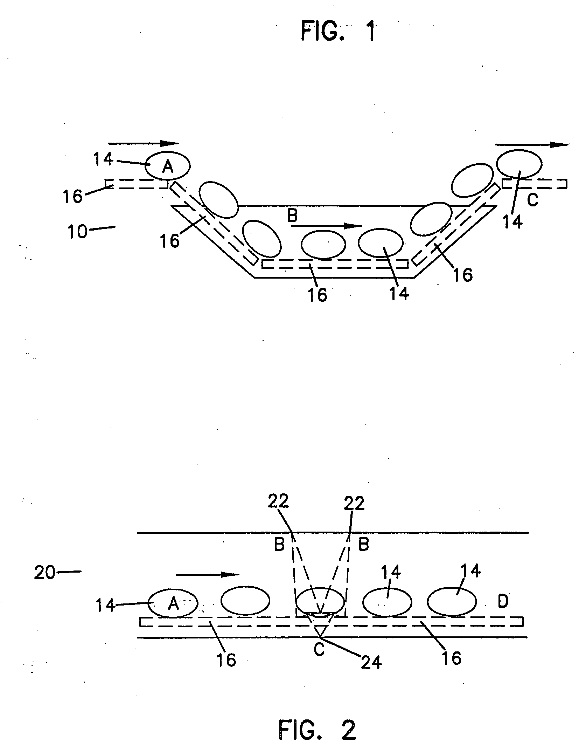

When the method is used in conjunction with a shrink tunnel, it may use standard shrink tunnel equipment, or modified shrink tunnel equipment. Some examples of shrink tunnels are described in Figures 1-5. It is understood that the method may be used in any shrink tunnel including variations of the shrink tunnels described in Figure 1-5 and that the shrink tunnels described in Figures 1-5 are intended to be exemplary. When referring to the figures, like structures and elements shown throughout are indicated with like reference numerals.

Figure 1 illustrates a schematic of an immersion shrink tunnel generally (10). The immersion shrink tunnel (10) is full of heated water. In the immersion shrink tunnel (10), the food product (14) enters the immersion shrink tunnel (10) full of heated water on a conveyor (16). As the food product (14) is immersed in the heated water, the heated water shrinks excess packaging film while activating an antimicrobial composition applied to the food product.

Figure 2 illustrates a schematic of a cascading shrink tunnel generally (20). The cascading shrink tunnel (20) includes a conveyor (16). The cascading shrink tunnel (20) is fitted with multiple upper cascading water streams (22) that spray heated water on the top of the food product (14). From below the conveyor a jet of heated water (24) sprays the bottom of the food product (14). The food product (14) enters the shrink tunnel (20) on the conveyor (16) and the water streams (22) and jet (24) spray heated water on the food product (14) causing the excess packaging film to shrink while activating an antimicrobial composition applied to the food product.

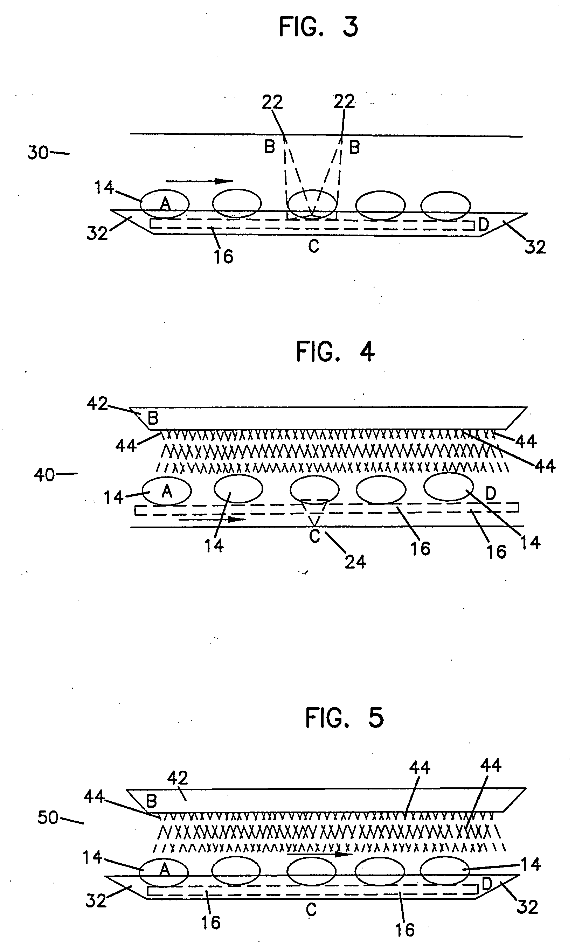

Figure 3 illustrates a schematic of a cascading shrink tunnel with a bottom basin generally (30). The cascading shrink tunnel (30) includes a conveyor (16), multiple upper cascading water streams (22), and a bottom basin (32). The bottom basin (32) functions to collect heated water from the cascading water streams (22) and ensure that the bottom of the food product (14) is covered by heated water. The food product (14) enters the shrink tunnel (30) on the conveyor (16) and the water streams (22) spray heated water on the food product (14) as the food product (14) travels through the bottom basin (32) that is full of heated water from the cascading water streams (22). The heated water shrinks excess packaging film while activating an antimicrobial composition applied to the food product.

Figure 4 illustrates a schematic of a drip flow shrink tunnel with a bottom jet generally (40). The drip flow shrink tunnel includes a conveyor (16) and an upper drip pan (42) that is full of heated water. The upper drip pan (42) includes many small holes (44) for allowing the heated water to flow out of the drip pan (42) and onto the food product (14). The advantage of this type of shrink tunnel is the extended exposure time of the food product (14) to heated water in comparison to the cascading shrink tunnel described in Figure 2. From below, a jet of heated water (24) sprays the food product (14) with heated water. The food product (14) enters the shrink tunnel (40) on a conveyor (16) and is exposed to heated water from the drip pan (42) and from the jet of heated water (24). The heated water shrinks excess packaging film while activating an antimicrobial composition applied to the food product.

Figure 5 illustrates a schematic of a drip flow shrink tunnel with a bottom basin generally (50). The shrink tunnel (50) includes a conveyor (16), an upper drip pan (42) that has many small holes (44) for allowing the heated water in the drip pan (42) to flow through, and a bottom basin (32) that is full of heated water. This shrink tunnel also has the advantage of an extended exposure time to heated water in comparison to the cascading shrink tunnel described in Figure 2. The food product (14) enters the shrink tunnel (50) on a conveyor (16). The food product (14) is exposed to heated water from the upper basin (42) through the small holes (44), and from the lower basin (32) that is full of heated water. The heated water shrinks excess packaging film while activating an antimicrobial composition applied to the food product.

### Food Product

As used herein, the term "food product" or "food" refers to any food or beverage item that may be consumed by humans or animals. Some examples of a "food product" or "food" include the following: meat products including ready-to-eat ("RTE") meat and poultry products, processed meat and poultry products, cooked meat and poultry products, and raw meat and poultry products including beef, pork, and poultry products. Raw beef products include primal cuts such as chuck, rib, short loin, sirloin, round, brisket, plate, and flank, and associated sub primal cuts such as blade and arm cuts, back ribs, rib-eye steaks and roasts, rib roasts, top loin, tenderloin, bottom butt, top butt, sirloin steak, bottom round, top round, eye round, brisket, fore shank, short ribs and flank. Raw pork products include primal cuts such as shoulder, loin, leg/ham and side/belly, and associated sub primal cuts including blade shoulder, picnic shoulder, rib end, center cut, sirloin, butt half, shank half, side rib, and pork side. Fish products include cooked and raw fish, shrimp, and shellfish. Produce products include whole or cut fruits and vegetables and cooked or raw fruits and vegetables. And other food products include pizzas, ready made breads and bread doughs, cheese, eggs and egg-based products, and pre-made food items such as pre-made sandwiches. The methods are particularly useful for meat and poultry products. Specific examples of meat products including RTE deli or luncheon meats like turkey, ham, as well as roast beef, hot dogs and sausages. Additionally, the methods can be used on bacon and pre-made, pre-assembled, or pre-packaged meals such as TV dinners and microwaveable entrees or meals.

The following examples are given to illustrate some embodiments. These examples and experiments are to be understood as illustrative and not limiting. All parts are by weight, except where it is contrarily indicated.

### Example 1

The following example demonstrates the improved efficacy of sequential treatment with an oxidative composition followed by a fatty acid composition in killing *Listeria monocytogenes* on a ready-to-eat turkey product in the method.

For this example sodium chlorite was diluted in water from 500 ppm to 1,200 ppm. The pH of the sodium chlorite was then adjusted using any GRAS acid such as citric acid or sodium bisulfate to 2.4 to 2.6. The second solution of octanoic acid was prepared containing from 1,000 ppm to 10,000 ppm of octanoic acid, from 1.0 to 4.0 wt. % ethylene oxide/propylene oxide copolymer (Pluronic F108), and 2.0 to 6.0 wt. % propylene glycol. The octanoic acid solution was adjusted to pH 2.0 with any GRAS acid such as phosphoric acid.

**Table 1 An Acidified Sodium Chlorite (ASC) Composition Containing:**

| **Level (ppm)** | **Raw Material** |
|---|---|
| 1200 | Sodium Chlorite |
| 6000 | Citric Acid |

| | |
|---|---|
| Final Solution pH ∼2.5 | |

**Table 2 An Octanoic Acid Composition Containing:**

| **Level (Wt. %)** | **Raw Material** |
|---|---|
| 2.85 | Pluronic F108 |
| 5.00 | Propylene Glycol |
| 0.20 | Phosphoric Acid (75%) |
| 1.00 | Octanoic Acid |

| | |
|---|---|
| Final Solution pH ∼2.0 | |

An equal-part mixture of five strains of *L. monocytogenes* including ATCC 19112, ATCC 19114, ATCC 19115, ATCC 7644, and NCTC 10890, suspended in Dey Engley Broth, was used as the inoculum. 0.1 milliliters of the inoculum was placed onto each RTE turkey breast, spread with a sterile bent glass rod, followed by storage at 5°C for 10 minutes to allow for bacterial attachment. The acidified sodium chlorite solution was sprayed on the surface of the RTE product. Immediately after, the turkey breasts were placed into bags. The octanoic acid solution was then applied to the RTE product in the bag. In this example, the volume of each of the antimicrobial composition applied to each RTE turkey breasts was 15 milliliters. The bags were immediately vacuum-packaged, and submerged in 200° F water for 2 seconds to simulate passage through a shrink tunnel. The bags were then submerged in a 2°C water bath for ≥ 1 minute. Two replicates were completed per treatment. The samples were stored at 5° C for up to 14 days before analyzed for populations of *L. monocytogenes.* Fifty milliliters of University of Vermont broth were added to each bag. The RTE turkey breasts were tumbled to recover cells. The resulting suspension was plated in Modified Oxford Medium

Agar and the plates were incubated at 35° C for 72 hours prior to enumeration of *L. monocytogenes.*

**Table 3 Efficacy of Acidified Sodium Chlorite and Octanoic Acid and Heat on L. monocytogenes on RTE Turkey**

| **Treatment** | **1 day of storage** | | **14 days of storage** | |
|---|---|---|---|---|
| | **Average Log₁₀ CFU/sample** | **Average Log₁₀ Reduction** | **Average Log₁₀ CFU/sample** | **Average Log₁₀ Reduction** |
| None (Control) | 4.09 | NA | 5.19 | NA |
| ASC | 2.15 | 1.94 | 2.05 | 3.14 |
| ASC & Octanoic Acid | 1.94 | 2.15 | <1.70 | >3.49 |

| | | | | |
|---|---|---|---|---|
| ^{a}Limit of detection of the assay was 1.70 log₁₀ CFU/sample | | | | |

Sequential treatment with acidified sodium chlorite and octanoic acid resulted in superior anti-listerial efficacy on RTE turkey breasts following 14 days of storage over treatment with ASC alone.

### Example 2 (not according to the invention)

The following example demonstrates the improved efficacy of sequential treatment with an oxidative composition followed by a fatty acid solution in killing *Escherichia coli* O157:H7 on raw beef brisket when used in the method.

For this example, aqueous solutions of 225 ppm peroxyacid and 0.9% octanoic acid were prepared containing the following compositions:

**Table 4 A Peroxyacid Composition Containing:**

| **Level (ppm)** | **Raw Material** |
|---|---|
| 775 | Acidic Acid |
| 225 | Mixed Percarboxylic Acids* |
| 140 | Octanoic Acid |
| 75 | Hydrogen Peroxide |
| 10 | HEDP |

| | |
|---|---|
| *Mixture of peroxyacetic and peroxyoctanoic acids Final Solution pH ∼1.5 | |

**Table 5 An Octanoic Acid Composition Containing:**

| **Level (%)** | **Raw Material** |
|---|---|
| 2.50 | Citric Acid |
| 1.65 | Potassium Hydroxide |
| 2.50 | Propylene Glycol |
| 5.00 | Polysorbate 20 |
| 0.90 | Octanoic Acid |

| | |
|---|---|
| Final Solution pH ∼3.7 | |

An equal-part mixture of five strains of *E. coli* O157:H7 including E0137, E0139, ATCC 35150, ATCC 43890, and LJF557 suspended in Dey Engley Broth, was used as the inoculum. One-hundred microliters of the inoculum was pipetted onto each brisket sample which were stored at 5°C for 1 hour to allow for bacterial attachment. One set of inoculated brisket samples was placed in shrink-film bags and 6.5 mL of a 0.9% octanoic acid solution was dispensed over each sample. Bags were vacuum-sealed and heat shrunk to distribute the treatment solution over the surfaces of the samples. A second set of inoculated brisket samples was sprayed with a 225 ppm peroxyacid solution and packaged as described. A third set of inoculated brisket samples was sprayed with a 225 ppm peroxyacid solution, placed in shrink-film bags, treated with 6.5 mL of a 1% octanoic acid solution, and vacuum-sealed and heat shrunk as described. A fourth set of inoculated brisket samples was not treated and used as a control to calculate log reductions in the population of *E. coli* O157:H7 achieved by each treatment. After a 24-hour storage period at 5°C, the pathogen was recovered into Dey Engley Broth and enumerated on CT-SMAC agar.

**Table 6 Efficacy of Sequential Treatment with 225 ppm Peroxyacid and 0.9% Octanoic Acid in killing E. coli O157:H7 on Raw Beef Brisket**

| **Treatment #1** | **Treatment #2** | **Average Log₁₀ CFU/sample** | **Average Log₁₀ Reduction Vs. Control** |
|---|---|---|---|
| None (Control) | None (Control) | 6.83 | Not Applicable |
| Octanoic Acid Solution | N one | 6.02 | 0.81 |
| Peroxyacid Acid Solution | None | 5.87 | 0.96 |
| Peroxyacid Acid Solution | Octanoic Acid Solution | 5.63 | 1.20 |

Treatment of raw beef brisket with peroxyacid followed by an in-package treatment using octanoic acid achieved a greater log reduction in *E. coli* O157:H7 populations than the log reduction achieved by each treatment applied individually.

### Example 3

The following example demonstrates the improved efficacy of sequential treatment with an oxidative composition followed by a fatty acid solution in killing *Escherichia coli* O157:H7 on raw beef brisket when used in the method.

For this example, aqueous solutions of 1000 ppm acidified sodium chlorite and 0.9% octanoic acid were prepared with the following compositions:

**Table 7 An Acidified Sodium Chlorite Composition Containing:**

| **Level (ppm)** | **Raw Material** |
|---|---|
| 1000 | Sodium Chlorite |
| 6750 | Citric Acid |

| | |
|---|---|
| Final Solution pH ∼2.45 | |

**Table 8 An Octanoic Acid Composition Containing:**

| **Level (%)** | **Raw Material** |
|---|---|
| 2.50 | Citric Acid |
| 2.50 | Propylene Glycol |
| 5.00 | Polysorbate 20 |
| 0.90 | Octanoic Acid |

| | |
|---|---|
| Final Solution pH ∼2.1 | |

An equal-part mixture of five strains of *E. coli* O157:H7 including E0137, E0139, ATCC 35150, ATCC 43890, and LJF557 suspended in Dey Engley Broth, was used as the inoculum. One-hundred microliters of the inoculum was pipetted onto each brisket sample which were stored at 5°C for 1.75 hours to allow for bacterial attachment. One set of inoculated brisket samples was placed in shrink-film bags and 6.5 mL of a 0.9% octanoic acid solution was dispensed over each sample. Bags were vacuum-sealed and heat shrunk 2 seconds at 93°C (200°F) to distribute the treatment solution over the surfaces of the samples. A second set of inoculated brisket samples was sprayed with 75 milliliters of a 1000 ppm acidified sodium chlorite solution and packaged as described. A third set of inoculated brisket samples was sprayed with a 1000 ppm acidified sodium chlorite solution, placed in shrink-film bags, treated with 6.5 mL of a 0.9% octanoic acid solution, and vacuum-sealed and heat shrunk as described. A fourth set of inoculated brisket samples was not treated and used as a control to calculate log reductions in the population of *E. coli* O157:H7 achieved by each treatment. After a 24-hour storage period at 5°C, the pathogen was recovered into Dey Engley Broth and enumerated on CT-SMAC agar.

**Table 9 Efficacy of Sequential Treatment with 1000 ppm Peroxyacetic acid and 0.9% Octanoic Acid in killing E. coli O157:H7 on Raw Beef Brisket**

| **Treatment #1** | **Treatment #2** | **Average Log₁₀ CFU/sample** | **Average Log₁₀ Reduction Vs. Control** |
|---|---|---|---|
| None (Control) | None (Control) | 6.17 | Not Applicable |
| Octanoic Acid Solution | N one | 5.05 | 1.12 |
| Acidified Sodium Chlorite Solution | None | 5.23 | 0.94 |
| Acidified Sodium Chlorite | Octanoic Acid Solution | 4.48 | 1.69 |

Treatment of raw beef brisket with acidified sodium chlorite followed by an in-package treatment using octanoic acid achieved a greater log reduction in *E. coli* O157:H7 populations than the log reduction achieved by each treatment applied individually.

### Example 4

The following example demonstrates the improved efficacy of sequential treatment with an oxidative composition followed by a fatty acid solution in killing *Escherichia coli* O157:H7 on raw beef flanks when used in the method.

For this example, aqueous solutions of 1000 ppm acidified sodium chlorite and 0.9% octanoic acid were prepared with the following compositions:

**Table 10 Acidified Sodium Chlorite Composition Containing:**

| **Level (ppm)** | **Raw Material** |
|---|---|
| 1000 | Sodium Chlorite |
| 6750 | Citric Acid |

| | |
|---|---|
| Final Solution pH ∼2.48 | |

**Table 11 An Octanoic Acid Composition Containing;**

| **Level (%)** | **Raw Material** |
|---|---|
| 2.50 | Citric Acid |
| 2.50 | Propylene Glycol |
| 5.00 | Polysorbate 20 |
| 0.90 | Octanoic Acid |

| | |
|---|---|
| Final Solution pH ∼2.06 | |

An equal-part mixture of five strains of *E. coli* O157:H7 including E0137, E0139, ATCC 35150, ATCC 43890, and LJF557 suspended in Dey Engley Broth, was used as the inoculum. One-hundred microliters of the inoculum was pipetted onto each flank sample which were stored at 5°C for 1 hour to allow for bacterial attachment. One set of inoculated flank samples was placed in shrink-film bags and 6.5 mL of a 0.9% octanoic acid solution was dispensed over each sample. Bags were vacuum-sealed and heat shrunk 2 seconds at 93°C (200°F) to distribute the treatment solution over the surfaces of the samples. A second set of inoculated flank samples was sprayed with 75 milliliters of a 1000 ppm acidified sodium chlorite solution and packaged as described. A third set of inoculated flank samples was sprayed with a 1000 ppm acidified sodium chlorite solution, placed in shrink-film bags, treated with 6.5 mL of a 0.9% octanoic acid solution, and vacuum-sealed and heat shrunk as described. A fourth set of inoculated flank samples was not treated and used as a control to calculate log reductions in the population of *E. coli* O157:H7 achieved by each treatment. After a 24-hour storage period at 5°C, the pathogen was recovered into Dey Engley Broth and enumerated on CT-SMAC agar.

**Table 12 Efficacy of Sequential Treatment with 1000 ppm Peroxyacetic acid and 0.9% Octanoic Acid in killing E. coli O157:H7 on Raw Beef Flanks**

| **Treatment #1** | **Treatment #2** | **Average Log₁₀ CFU/sample** | **Average Log₁₀ Reduction Vs. Control** |
|---|---|---|---|
| None (Control) | None (Control) | 6.28 | Not Applicable |
| Octanoic Acid Solution | None | 5.15 | 1.13 |
| Acidified Sodium Chlorite | None | 4.58 | 1.70 |
| Acidified Sodium Chlorite | Octanoic Acid Solution | 4.48 | 1.80 |

Treatment of raw beef flank with acidified sodium chlorite followed by an in-package treatment using octanoic acid achieved a greater log reduction in *E. coli* O157:H7 populations than the log reduction achieved by each treatment applied individually.

### Example 5

The following example demonstrates the improved efficacy of sequential treatment with an oxidative composition followed by a fatty acid solution in killing *Escherichia coli* O157:H7 and spoilage-causing psychrotrophic bacteria on raw beef flanks when used in the method.

For this example, aqueous solutions of 1.0% octanoic acid and 1020 ppm Acidified Sodium Chlorite (ASC) solution were prepared with the following compositions:

**Table 13 An Octanoic Acid Composition Containing:**

| **Level (%)** | **Raw Material** |
|---|---|
| 2.5 | Citric Acid |
| 3.0 | Polysorbate 20 |
| 1.0 | Octanoic Acid |

| | |
|---|---|
| Final Solution pH ∼2.2 | |

**Table 14 An Acidified Sodium Chlorite Composition Containing:**

| **Level (ppm)** | **Raw Material** |
|---|---|
| 1020 | Sodium Chlorite |
| 6,707 | Citric Acid |

| | |
|---|---|
| Final Solution pH ∼2.45 | |

An equal-part mixture of five strains of *E. coli* O157:H7 including E0137, E0139, ATCC 35150, ATCC 43890, and LJF557 suspended in phosphate buffered dilution water, was used as the inoculum. One-hundred microliters of the inoculum was pipetted onto each flank sample which were stored at 5°C for 1 hour to allow for bacterial attachment. Flank samples were grouped into sets of three samples each. One set of inoculated flank samples was placed in shrink-film bags and 6.5 mL of a 1% octanoic acid solution was dispensed over each sample. Bags were vacuum-sealed and heat shrunk to distribute the treatment solution over the surfaces of the samples. A second set of inoculated flank samples was sprayed with a 1020 ppm acidified sodium chlorite solution and packaged as described above. A third set of inoculated flank samples was sprayed with a 1020 ppm acidified sodium chlorite solution, placed in shrink-film bags, treated with 6.5 mL of a 1% octanoic acid solution, and vacuum-sealed and heat shrunk as described. A fourth set of inoculated flank samples was not treated and used as a control to calculate log reductions in the population of *E. coli* O157:H7 achieved by each treatment. After a storage at 5°C for 24 hours, the pathogen was recovered into Dey Engley Broth and enumerated on CT-SMAC agar. After storage at 5°C for 20 days, psychrotrophic bacteria were enumerated from flank samples from each of the four groups by recovery in Dey Engley Broth and plating on tryptone glucose extract agar. Plates were incubated for up to 14 days following incubation at 5°C.

**Table 15 Efficacy of Sequential Treatment with Acidified Sodium Chlorite and 1.0% Octanoic Acid in killing E. coli O157:H7 on Raw Beef Flanks**

| **Test** | **Treatment #1** | **Treatment #2** | **Average Log₁₀ CFU/ sample** | **Average Log₁₀ Reduction Vs. Control** |
|---|---|---|---|---|
| 1 | 1% Octanoic Acid Solution | None | 5.40 | 0.73 |
| 2 | 1020 ppm Acidified Sodium Chlorite solution | None | 4.75 | 1.38 |
| 3 | 1020 ppm Acidified Sodium Chlorite solution | 1% Octanoic Acid Solution | 4.28 | 1.85 |
| 4 | None (Control) | None (Control) | 6.13 | Not Applicable |

**Table 16 Efficacy of Sequential Treatment with Acidified Sodium Chlorite and 1.0% Octanoic Acid in killing psychrotrophic bacteria on Raw Beef Flanks**

| **Test** | **Treatment #1** | **Treatment #2** | **Average Log₁₀ CFU/ sample** | **Average Log₁₀ Reduction Vs. Control** |
|---|---|---|---|---|
| 1 | 1% Octanoic Acid Solution | None | 6.78 | 1.76 |
| 2 | 1020 ppm Acidified Sodium Chlorite solution | None | 7.82 | 0.72 |
| 3 | 1020 ppm Acidified Sodium Chlorite solution | 1% Octanoic Acid Solution | 4.80 | 3.74 |
| 4 | None (Control) | None (Control) | 8.54 | Not Applicable |

Treatment of raw beef flanks with Acidified Sodium Chlorite followed by an in-package treatment using octanoic acid achieved a greater log reduction in *E. coli* O157:H7 and spoilage-causing psychrotrophic bacteria populations than the log reduction achieved by each treatment applied individually.

### Example 6

The following example demonstrates the improved efficacy of sequential treatment with an oxidative composition followed by a fatty acid solution in killing *Escherichia coli* O157:H7 on raw beef flanks when used in the method.

For this example, aqueous solutions of 1.0% octanoic acid acidulated with either citric acid or lactic acid and 966 ppm Acidified Sodium Chlorite (ASC) solution were prepared with the following compositions:

**Table 17 An Octanoic Acid Composition Acidulated with Citric Acid Containing:**

| **Level (%)** | **Raw Material** |
|---|---|
| 5.0 | Citric Acid |
| 3.5 | Polysorbate 20 |
| 1.0 | Octanoic Acid |

| | |
|---|---|
| Final Solution pH ∼2.2 | |

**Table 18 An Octanoic Acid Composition Acidulated with Lactic Acid Containing:**

| **Level (%)** | **Raw Material** |
|---|---|
| 8.8 | Lactic Acid |
| 10.0 | Propylene Glycol |
| 0.5 | Pluronic F108 |
| 1.0 | Octanoic Acid |

| | |
|---|---|
| Final Solution pH ∼2.0 | |

**Table 19 An Acidified Sodium Chlorite Composition Containing:**

| **Level (ppm)** | **Raw Material** |
|---|---|
| 1000 | Sodium Chlorite |
| 6,750 | Citric Acid |

| | |
|---|---|
| Final Solution pH ∼2.43 | |

An equal-part mixture of five strains of *E. coli* O157:H7 including E0137, E0139, ATCC 35150, ATCC 43890, and LJF557 suspended in Dey Engley Broth, was used as the inoculum. One-hundred microliters of the inoculum was pipetted onto each flank sample which were stored at 5°C for 1 hour to allow for bacterial attachment. Flank samples were grouped into sets of three samples each. One set of inoculated flank samples was placed in shrink-film bags and 6.5 mL of a 1% octanoic acid solution acidulated with citric acid was dispensed over each sample. Bags were vacuum-sealed and heat shrunk to distribute the treatment solution over the surfaces of the samples. A second set of inoculated flank samples was sprayed with a 1000 ppm acidified sodium chlorite solution and packaged as described above. A third set of inoculated flank samples was sprayed with a 1000 ppm acidified sodium chlorite solution, placed in shrink-film bags, treated with 6.5 mL of a 1% octanoic acid solution acidulated with citric acid, and vacuum-sealed and heat shrunk as described. A fourth set of inoculated flank samples was placed in shrink-film bags and 6.5 mL of a 1% octanoic acid solution acidulated with lactic acid was dispensed over each sample. Bags were vacuum-sealed and heat shrunk to distribute the treatment solution over the surfaces of the samples. A fifth set of inoculated flank samples was sprayed with a 1000 ppm acidified sodium chlorite solution, placed in shrink-film bags, treated with 6.5 mL of a 1% octanoic acid solution acidulated with lactic acid, and vacuum-sealed and heat shrunk as described. A sixth set of inoculated flank samples was not treated and used as a control to calculate log reductions in the population *of E. coli* O157:H7 achieved by each treatment. After a 24-hour storage period at 5°C, the pathogen was recovered into Dey Engley Broth and enumerated on CT-SMAC agar.

**Table 20 Efficacy of Sequential Treatment with Acidified Sodium Chlorite and 1.0% Octanoic Acid in killing E. coli O157:H7 on Raw Beef Flanks**

| **Test** | **Treatment #1** | **Treatment #2** | **Average Log₁₀ CFU/sample** | **Average Log₁₀ Reduction Vs. Control** |
|---|---|---|---|---|
| 1 | 1% Octanoic Acid Solution acidulated with citric acid | None | 4.42 | 1.34 |
| 2 | 1000 ppm Acidified Sodium Chlorite solution | None | 4.30 | 1.46 |
| 3 | 1000 ppm Acidified Sodium Chlorite solution | 1% Octanoic Acid Solution acidulated with citric acid | 3.53 | 2.23 |
| 4 | 1% Octanoic Acid Solution acidulated with lactic acid | None | 3.40 | 2.30 |
| 5 | 1000 ppm Acidified Sodium Chlorite solution | 1% Octanoic Acid Solution acidulated with lactic acid | 2.86 | 2.90 |
| 6 | None (Control) | None (Control) | 5.76 | Not Applicable |

Treatment of raw beef flanks with Acidified Sodium Chlorite followed by an in-package treatment using octanoic acid acidified with either citric acid or lactic acid achieved a greater log reduction in *E. coli* O157:H7 populations than the log reduction achieved by each treatment applied individually.

### Example 7

The following example demonstrates the improved efficacy of sequential treatment with an oxidative composition followed by a fatty acid solution in killing *Escherichia coli* O157:H7 on raw beef flanks when used in the method.

For this example, aqueous solutions of 1.0% octanoic acid acidulated with lactic acid and 1,023 ppm Acidified Sodium Chlorite (ASC) solution were prepared with the following compositions:

**Table 21 An Octanoic Acid Composition Acidulated with Lactic Acid Containing:**

| **Level (%)** | **Raw Material** |
|---|---|
| 2.4 | Lactic Acid |
| 3.5 | Tween 20 |
| 1.0 | Octanoic Acid |

| | |
|---|---|
| Final Solution pH ∼2.3 | |

**Table 22 An Acidified Sodium Chlorite Composition Containing:**

| **Level (ppm)** | **Raw Material** |
|---|---|
| 1,000 | Sodium Chlorite |
| 1,400 | Sodium Acid Sulfate |

| | |
|---|---|
| Final Solution pH ∼2.5 | |

An equal-part mixture of five strains of *E. coli* O157:H7 including E0137, E0139, ATCC 35150, ATCC 43890, and LJF557 suspended in Dey Engley Broth, was used as the inoculum. One-hundred microliters of the inoculum was pipetted onto each flank sample which were stored at 5°C for 1 hour to allow for bacterial attachment. Flank samples were grouped into sets of three samples each. One set of inoculated flank samples was placed in shrink-film bags and 6.5 mL of a 1% octanoic acid solution acidulated with lactic acid was dispensed over each sample. Bags were vacuum-sealed and heat shrunk to distribute the treatment solution over the surfaces of the samples. A second set of inoculated flank samples was sprayed with a 1000 ppm acidified sodium chlorite solution and packaged as described above. A third set of inoculated flank samples was sprayed with a 1000 ppm acidified sodium chlorite solution, placed in shrink-film bags, treated with 6.5 mL of a 1% octanoic acid solution acidulated with lactic acid, and vacuum-sealed and heat shrunk as described. A fourth set of inoculated flank samples was not treated and used as a control to calculate log reductions in the population of *E. coli* O157:H7 achieved by each treatment. After a 24-hour storage period at 5°C, the pathogen was recovered into Dey Engley Broth and enumerated on CT-SMAC agar.

**Table 23 Efficacy of Sequential Treatment with Acidified Sodium Chlorite and 1.0% Octanoic Acid in killing E. coli O157:H7 on Raw Beef Flanks**

| **Test** | **Treatment #1** | **Treatment #2** | **Average Log₁₀ CFU/sample** | **Average Log₁₀ Reduction Vs. Control** |
|---|---|---|---|---|
| 1 | 1% Octanoic Acid Solution acidulated with lactic acid | None | 4.59 | 1.09 |
| 2 | 1000 ppm Acidified Sodium Chlorite solution | None | 3.53 | 2.15 |
| 3 | 1000 ppm Acidified Sodium Chlorite solution | 1% Octanoic Acid Solution acidulated with lactic acid | 3.18 | 2.50 |
| 4 | None (Control) | None (Control) | 5.68 | Not Applicable |

Treatment of raw beef flanks with Acidified Sodium Chlorite followed by an in-package treatment using octanoic acid acidified with lactic acid achieved a greater log reduction in *E. coli* O157:H7 populations than the log reduction achieved by each treatment applied individually.

### Example 8 (not according to the invention)

The following example demonstrates the ongoing technical effect with the inclusion of preservative agents to the antimicrobial composition. An octanoic acid (OA) solution treatment with and without preservative agents was applied to fresh beef briskets and naturally occurring populations of psychrotrophic bacteria were measured after refrigerated storage.

One of three treatment solutions was applied to cut beef brisket samples. 1) a solution of 1% OA using Polysorbate 20 as a coupler, acidified to pH 5.5 using citric acid; 2) a solution of 1% OA using Polysorbate 20 as a coupler, 2,600 ppm benzoic acid, 750 ppm sorbic acid, acidified to pH 4.2 using citric acid; 3) water control. Samples of cut beef brisket (10 cm x 20 cm x 5.5 cm) were prepared and placed in shrink bags. 15 ml of one of the treatment solution was added to each bag. Bags were vacuum-packaged, submersed in 200°F water for 2 seconds to simulate passage through a shrink tunnel and stored at 10°C for up to 21 days. Three replicates per treatment were completed.

Samples were removed from storage after 3 or 21 days and analyzed for populations of psychrotrophic microorganisms. 50 ml of 2X Dey/Engley Neutralizing medium were added to each sample bag. Samples were tumbled for 50 rotations in a rotary tumbler and resulting suspension was plated on tryptone glucose extract agar. Plates were incubated at 10°C for 7 days prior to enumeration of CFU per sample.

**Table 24 Efficacy of 1.0% Octanoic Acid with and without Preservatives in Controlling Populations of Psychrotrophic bacteria on Raw Beef Brisket.**

| **Treatment Solution** | **Average Log₁₀ CFU/sample At Day 3** | **Average Log₁₀ Reduction Vs. Control At Day 3** | **Average Log₁₀ CFU/sample At Day 21** | **Average Log₁₀ Reduction Vs. Control At Day 21** |
|---|---|---|---|---|
| 1% Octanoic Acid Solution acidulated with citric acid to pH 5.5 | 5.82 | 1.12 | 9.68 | 0.77 |
| 1% Octanoic Acid Solution, with 2,600 ppm benzoic acid and 750 ppm sorbic acid acidulated with citric acid to pH 4.2 | 5.86 | 1.08 | 7.80 | 2.65 |
| Water Control | 6.94 | n/a | 10.46 | n/a |

The use of sorbic acid and benzoic acid in combination with an octanoic acid solution provided control of psychrotrophic bacteria on raw beef Briskets.

### Example 9 (not according to the invention)

Beef tenderloin was treated with two compositions containing octanoic acid and inspected visually for their desirability factor based on color by a sensory panel of at least 12 people. The first composition was formulated at pH 3.7 and the second was formulated at pH 5.5. Compositions were added into the vacuum-package bag which contained the beef tenderloin samples. One subset of beef tenderloin samples was left untreated and served as a control. Following treatment, samples were vacuum packed and stored for three days at 2-8°C. Samples were then removed from vacuum-packages and cut into steaks. Steaks were held aerobically for up to 2 days at 2-8°C. At 2 hours and 2 days of storage, steaks were removed from storage at 2-8°C and inspected for desirability based on color. A score of 1 indicates the panelist disliked very much the color of the steaks. A score of 5 indicates the panelist liked very much the color of the steaks. The threshold of desirability was held at a score of 2.5. Results show that the beef tenderloin treated with the composition at pH 5.5 remained above the desirability threshold throughout the 2 day storage time, whereas the desirability of the control steaks reduced substantially over the same period. Steaks treated with the composition at pH 3.7 where not acceptable at either time point analyzed.

**Table 25 Quality of Beef Tenderloin treated with Octanoic Acid formulated at pH 5.5 or pH 3.7. Hedonic scale; 1 = dislike very much; 5 = like very much.**

| **Treatment Solution** | **Aerobic Storage Time** | |
|---|---|---|
| | **2 hours** | **2 days** |
| 1% Octanoic Acid Solution acidulated with citric acid to pH 3.7 | 1.4 | 1.8 |
| 1% Octanoic Acid Solution acidulated with citric acid to pH 5.5 | 3.1 | 2.8 |
| Control | 4.5 | 2.2 |

### Definitions

For the following defined terms, these definitions shall be applied, unless a different definition is given in the claims or elsewhere in this specification.

Weight percent, percent by weight, % by weight, wt %, and the like are synonyms that refer to the concentration of a substance as the weight of that substance divided by the weight of the composition and multiplied by 100.

The use of the terms "antimicrobial" in this application does not mean that any resulting products are approved for use as an antimicrobial agent.

## Claims

1. A method of treating a food product comprising:
a) applying a first antimicrobial composition to the food product;
b) sequentially applying a second antimicrobial composition to the food product within 30 minutes of the first antimicrobial composition, the second antimicrobial composition comprising 0.01 wt.% to 2 wt.% of a fatty acid, wherein the fatty acid is octanoic acid;
c) packaging the food product; and
d) sealing the packaging,
wherein the first antimicrobial composition comprises 0.01 wt.% to 2 wt.% of an antimicrobial agent that is oxidative, wherein the oxidative antimicrobial agent is acidified sodium chlorite;
wherein the fatty acid and oxidative agent are part of separate compositions.

2. The method of claim 1, wherein the second antimicrobial composition is applied within 10 minutes of the first antimicrobial composition.

3. The method of claim 1, wherein the second antimicrobial composition is applied within one minute of the first antimicrobial composition.

4. The method of claim 1, wherein the second antimicrobial composition is applied, when the food product is placed inside of the packaging.

5. The method of claim 1, wherein the packaging is a shrink film.

## Patentansprüche

1. Verfahren zum Behandeln eines Nahrungsmittelprodukts, Folgendes umfassend:
(a) Auftragen einer ersten antimikrobiellen Zusammensetzung auf das Nahrungsmittelprodukt;
(b) sequentielles Auftragen einer zweiten antimikrobiellen Zusammensetzung auf das Nahrungsmittelprodukt innerhalb von 30 Minuten nach der ersten antimikrobiellen Zusammensetzung, wobei die zweite antimikrobielle Zusammensetzung 0,01 Gew.-% bis 2 Gew.-% einer Fettsäure umfasst, wobei die Fettsäure Oktansäure ist;
(c) Verpacken des Nahrungsmittelprodukts; und
(d) Verschließen der Verpackung,
wobei die erste antimikrobielle Zusammensetzung 0,01 Gew.-% bis 2 Gew.-% eines antimikrobiellen Mittels umfasst, das oxidativ ist, wobei das antimikrobielle Oxidationsmittel angesäuertes Natriumchlorit ist;
wobei die Fettsäure und das Oxidationsmittel Teil getrennter Zusammensetzungen sind.

2. Verfahren nach Anspruch 1, wobei die zweite antimikrobielle Zusammensetzung innerhalb von 10 Minuten nach der ersten antimikrobiellen Zusammensetzung aufgetragen wird.

3. Verfahren nach Anspruch 1, wobei die zweite antimikrobielle Zusammensetzung innerhalb einer Minute nach der ersten antimikrobiellen Zusammensetzung aufgetragen wird.

4. Verfahren nach Anspruch 1, wobei die zweite antimikrobielle Zusammensetzung aufgetragen wird, wenn sich das Nahrungsmittelprodukt in der Verpackung befindet.

5. Verfahren nach Anspruch 1, wobei die Verpackung eine Schrumpffolie ist.

## Revendications

1. Procédé de traitement d'un produit alimentaire comprenant :
(a) l'application d'une première composition antimicrobienne sur le produit alimentaire ;
(b) l'application séquentielle d'une seconde composition antimicrobienne sur le produit alimentaire dans les 30 minutes qui suivent l'application de la première composition antimicrobienne, la seconde composition antimicrobienne comprenant de 0,01 % en poids à 2 % en poids d'un acide gras, l'acide gras étant de l'acide octanoïque ;
(c) l'emballage du produit alimentaire ; et
(d) le scellement de l'emballage,
dans lequel la première composition antimicrobienne comprend de 0,01 % en poids à 2 % en poids d'un agent antimicrobien oxydatif, l'agent antimicrobien oxydatif étant du chlorite de sodium acidifié ;
dans lequel l'acide gras et l'agent oxydatif font partie de compositions séparées.

2. Procédé selon la revendication 1, dans lequel la seconde composition antimicrobienne est appliquée dans les 10 minutes qui suivent l'application de la première composition antimicrobienne.

3. Procédé selon la revendication 1, dans lequel la seconde composition antimicrobienne est appliquée dans la minute qui suit l'application de la première composition antimicrobienne.

4. Procédé selon la revendication 1, dans lequel la seconde composition antimicrobienne est appliquée lorsque le produit alimentaire est placé à l'intérieur de l'emballage.

5. Procédé selon la revendication 1, dans lequel l'emballage est un film rétractable.
